# EUROPÄISCHE PATENTSCHRIFT

(11) **EP 3 848 666 B1**
(45) Veröffentlichungstag und Bekanntmachung des Hinweises auf die Patenterteilung: **21.06.2023**
(21) Anmeldenummer: 20151367.8
(22) Anmeldetag: 13.01.2020
(51) Int. Cl.: G01B 5/00, A61C 13/00, A61C 1/00, B23Q 17/22

(54) **DENTALE FRÄSMASCHINE UND DENTALES FRÄSVERFAHREN**
DENTAL MILLING MACHINE AND DENTAL MILLING METHOD
FRAISEUSE DENTAIRE ET PROCÉDÉ DE FRAISAGE DENTAIRE

(43) Veröffentlichungstag der Anmeldung: 14.07.2021
(73) Patentinhaber: Ivoclar Vivadent AG, 9494 Schaan (LI)
(72) Erfinder: Lidan, Senad, 8048 Zürich (CH); Bogdan, Vadim, 75175 Pforzheim (DE); Rohrer, Gottfried, 9450 Altstätten (CH)
(74) Vertreter: Baldus, Oliver

(56) Entgegenhaltungen:
- EP-A1- 2 665 988
- DE-A1- 4 419 909
- DE-A1-102015 224 441
- US-A1- 2011 104 642

## Beschreibung

Die Erfindung betrifft eine Fräsmaschine, gemäß dem Oberbegriff von Anspruch 1, sowie ein Fräsverfahren, gemäß dem Oberbegriff von Anspruch 7.

Es ist bekannt, dass Fräsmaschinen, die eine Werkzeugspindel und einen Werkstückhalter aufweisen, so auszustatten, dass geprüft wird, ob das Werkstück für die Bearbeitung bereit ist oder nicht. Hierdurch soll sichergestellt werden, dass die Fräsmaschine nicht ins Leere fräst, etwa, wenn ein Roboterarm, Werkzeugschlitten und/oder Werkstückhalter, der ein Werkstück greifen soll, dieses verfehlt. Dies hätte ansonsten einen unproduktiven Leerlauf der Fräsmaschine zur Folge.

Ferner ist es aus der CH 663 891 A1 bekannt, bei einer dentalen Fräsmaschine, die ein Dentalrestaurationsteil aus einem Rohling fertigt, eine optische Abtastung der bearbeiteten Oberflächenform vorzunehmen. Eine dentale Fräsmaschine ist aus US 2011/0104642 A1 ebenfalls bekannt.

Schließlich ist es aus der DE 40 30 175 A1 bekannt, zum Kalibrieren von Werkstück und Werkzeug einen Werkzeug-Antriebsmotor auf eine Anfahrdrehzahl einzustellen, die so niedrig ist, dass bei Berührung zwischen Werkstück und Werkzeug die Drehzahl zu 0 wird.

Hierdurch wird praktisch bei Kontakt zwischen Werkstück und Werkzeug der Antriebsmotor vollständig abgebremst, wodurch die Position der Oberfläche des Werkszeugs relativ zum Werkstück erfasst wird.

Die bislang bekannten Erfassungsvorrichtungen für die Relativposition zwischen Werkstück und Werkzeug sind allerdings vergleichsweise ungenau.

Daher liegt der Erfindung die Aufgabe zu Grunde, eine Fräsmaschine gemäß dem Oberbegriff von Anspruch 1 sowie ein Verfahren zum Betrieb einer Fräsmaschine gemäß dem Oberbegriff von Anspruch 7 zu schaffen, die universell verwendbar sind und eine verbesserte Genauigkeit und verbesserte Reproduzierbarkeit der Fräsergebnisse ermöglichen.

Diese Aufgabe wird erfindungsgemäß durch Anspruch 1 bzw. 7 gelöst.

Vorteilhafte Weiterbildungen ergeben sich aus den Unteransprüchen.

Erfindungsgemäß ist der Abtaster als Tastfühler ausgelegt, ist also weder ein optischer Abtaster, noch ein Bremselement, wie es bei dem zuvor genannten Stand der Technik der Fall ist.

Erfindungsgemäß weist dieser Tastfühler ein Tastelement auf, das auslenkbar ist. Hierbei soll "auslenken" sowohl eine erfassbare Bewegung in die beiden Querrichtungen (X und Y) als auch in die Längsrichtung des Tastfühlers (Z-Richtung) umfassen.

Über die Auslenkung wird nun die Annäherung zwischen einer Oberfläche des Werkstücks und dem Tastfühler erfasst. Sobald die Auslenkung einen vorgegebenen Schwellenwert überschreitet, gibt das Tastelement ein Signal an eine Auswerteeinrichtung ab, mit welchem angezeigt wird, dass die zu erfassende Annäherung erreicht ist.

Erfindungsgemäß ist es vorgesehen, dass das Tastelement in 1 oder mehrere Raumrichtungen auslenkbar ist. Dies bedeutet, dass auch die Erfassung der Annäherung in 2 oder mehr Richtungen möglich ist.

Damit sind die Voraussetzungen geschaffen, ohne Drehung des Werkstücks relativ zum Werkzeug und/oder dem Tastfühler die Annäherung in 2 Raumrichtungen zu erfassen.

Die beiden Raumrichtungen können sich beispielsweise orthogonal zueinander erstrecken. Durch Abtastung unterschiedlicher Punkte auf den zueinander orthogonalen Flächen lässt sich auch feststellen, ob die betreffenden Flächen an dem Werkstück tatsächlich orthogonal zueinander ausgerichtet sind.

Bevorzugt erstrecken sich die mindestens 2 Raumrichtungen orthogonal zueinander. Dies vereinfacht die Berechnung der erfassten und aktuellen Relativpositionen von Tastfühler und Werkstück.

Es ermöglicht zudem in einfacher Weise, einen Versatz zwischen einem Systemnullpunkt und dieser Position in einfacher Weise anzugeben.

Ein Beispiel hierfür wäre die Falscheinspannung eines Werkstücks in die Werkstückhalterung. Dies würde zu einem Versatz führen, den eine Auswerteeinrichtung des Ausgangssignals des Tastfühlers sofort erkennen würde.

Ein Versatz würde sich auch bei einer Verschmutzung der Werkstückhalterung einstellen, oder bei einer Fehleinspannung durch den Benutzer. Auch hier würde die Auswerteeinrichtung des Ausgangssignals des Tastfühlers sofort erkennen, dass ein Fehler vorliegt.

Bevorzugt erfolgt die Erfassung nicht in 2, sondern in 3 Raumrichtungen im kartesischem Koordinatensystem. Es ist aber beispielsweise auch möglich, ein beliebig anderes Koordinatensystem zu verwenden.

In vorteilhafter Ausgestaltung der Erfindung ist der Tastfühler in die Frässpindel eingesetzt, anstelle eines Werkzeugs, das dort im Betrieb eingesetzt ist, und ist dort eingespannt gehalten. Besonders günstig ist es, wenn der Tastfühler einen Anschlag relativ zur Frässpindel hat, so dass eine definierte Position des Tastfühlers in der Frässpindel vorliegt.

Der Anschlag kann durch beliebige aufeinander zu weisende Flächen von Frässpindel und Tastfühler realisiert sein, beispielsweise je Flächen mit einer Flächennormalen, die sich parallel zur Achse der Frässpindel erstrecken.

Der Tastfühler ist bevorzugt kreissymmetrisch aufgebaut und ist in der Achse der Frässpindel eingespannt.

In vorteilhafter Ausgestaltung der Erfindung ist es vorgesehen, dass die Fräsmaschine einen stationären Spindelmotor und ein stationäres Spindelgehäuse hat, in dem die Frässpindel drehbar gelagert ist.

In vorteilhafter Ausgestaltung der Erfindung ist es vorgesehen, dass ein Spindelmotor bei Einspannung des Tastfühlers in die Frässpindel abgeschaltet ist oder abgeschaltet wird, insbesondere automatisch abgeschaltet ist.

Ein Werkstück lässt sich an einem Werkstückhalter eingespannt lagern und in 3, bevorzugt aber in 5, Raumrichtungen bewegen. Die Bewegung lässt sich bevorzugt mittels eines Roboterarms, einer Greifvorrichtung und/oder eines Werkzeugschlittens realisieren.

In vorteilhafter Ausgestaltung der Erfindung ist es vorgesehen, dass die Fräsmaschine eine Steuervorrichtung aufweist, mit welcher bei in die Frässpindel eingespanntem Tastfühler die Relativbewegung von Tastfühler und Werkstück steuerbar ist und das Werkstück in Anlage mit dem Tastfühler bringbar ist.

In vorteilhafter Ausgestaltung der Erfindung ist es vorgesehen, dass der Tastfühler die Ausrichtung und Raumlage eines Werkstücks erfasst, in dem an mindestens 2 Stellen des Werkstücks, die voneinander beabstandet sind, bevorzugt an mindestens 3 Stellen, eine Abtastung vorgenommen wird.

Weiter ist es möglich, den Tastfühler in einem ortsfest gelagerten Werkzeugmagazin im Fräsraum oder in einem verfahrbaren Werkzeugmagazin vorzusehen. Dort ist der Tastfühler dann bevorzugt an einer vorgegebenen Postion aufgenommen.

Für den Einsatz in der Werkzeugspindel greift ein Roboterarm dann den Tastfühler und steckt ihn in die Werkzeugspindel, bei geöffneter Spannzange.

Es versteht sich, dass auch bei dieser Lösung für die Übertragung der Messsignale des Tastfühlers zur Auswerteeinrichtung gesorgt werden muss.

Bevorzugt ist es bei dieser Lösung, die Übertragung drahtlos vorzusehen, z.B. per Funk oder per Infrarot. Eine drahtlose Kommunikationseinheit kann hierzu im Schaft des Tastfühlers untergebracht sein.

In vorteilhafter Ausgestaltung hat der Roboterarm Greifarme, die auch zum Wechsel des Werkzeugs dienen können. Wenn solche Greifarme oder eine beliebige andere Greifhandhabe vorgesehen ist, lässt sich dann bevorzugt mit einer solchen auch der Tastfühler in die Frässpindel einsetzen.

Es versteht sich, dass der Spindelmotor abgeschaltet ist, bevor der Tastfühler in die Frässpindel eingesetzt wird.

Ein besonderer Vorteil der Erfindung liegt in der Genauigkeit der Erfassung der Relativposition von Werkstück und Frässpindel.

Der Tastfühler kann sehr genau arbeiten, beispielsweise mit einer Grundgenauigkeit von 0,005 mm. Die Abtastreproduzierbarkeit kann sogar noch besser sein, zum Beispiel 0,002 mm.

Das Tastelement kann in einer Tastkugel enden und aus einem Material mit einem besonders geringen Wärmeausdehnungskoeffizient bestehen. Alternativ wird die Temperatur des Tastelements über einen Temperatursensor erfasst und einer Auswerteeinrichtung zugeleitet und dann die Längenänderung des Tastelements aufgrund der aktuellen Temperatur in die Auswertung einberechnet.

Für die Übertragung der Auslenkung des Tastelements kann dieses bevorzugt mehrachsig in dem Tastfühlergehäuse gelagert sein. In dem Gehäuse sind dann bevorzugt Drucksensoren vorgesehen, die mehrachsig verteilt sind und auf die Auslenkung des Tastelements ansprechen.

In vorteilhafter Ausgestaltung der Erfindung endet das Tastelement in oder an einer Kugel. Diese hat einen Durchmesser von zum Beispiel 0,5 mm oder 0,8 mm oder 1 mm. Aufgrund der Kugelform ist eine kreissymmetrische Anlage gegeben. Dies ist günstig, wenn verschiedene zueinander orthogonale Flächen abgefahren werden sollen, da dann der gleiche Abstand zwischen der Achse des Tastelements und dem Anlagebereich bei seitlicher Anlage vorliegt, unabhängig von der Ausrichtung, also unabhängig davon, welcher Bereich der Kugel in Anlage gerät.

Erfindungsgemäß ist es vorgesehen, dass die Auswerteeinrichtung mindestens die minimale Erstauslenkung des Tastelements bei Anlage erfasst. Beispielsweise kann eine Bewegung um 0,008 mm gegenüber der Achse des Tastelements erfasst werden, und von der Auswerteeinrichtung detektiert werden.

Dies gilt dann sowohl bei seitlicher Auslenkung als auch bei Auslenkung in Richtung der Stirnseite des Tastelements.

Es ist auch möglich, einen Tastfühler zu verwenden, bei dem über die Erstauslenkung des Tastelements hinausgehend der Grad der Auslenkung über ein erheblichen Winkelbereich erfasst werden kann, beispielsweise 3 oder gar 5 mm Auslenkungsweg.

Derartige Tastfühler erlauben es auch, den Bewegungsweg des Roboterarms, der das Werkstück hält, zu überprüfen. Anstelle dessen kann auch ein Werkstückschlitten oder ein sonstiger Werkstückhalter, der ein Werkstück greifen soll, verwendet werden.

In vorteilhafter Ausgestaltung ist es vorgesehen, dass das Werkstück als Rohling aus einer Dentalkeramik ausgebildet ist. Derartige Rohlinge werden beispielsweise aus Lithiumdisilikat hergestellt und zu Lithiummetasilikat vorgesintert. Sie sind auf einem Rohlinghalter aufgeklebt und als Rohling dafür bestimmt, durch die dentale Fräsmaschine zu einem Dentalrestaurationsteil gefräst zu werden. Des Weiteren gibt es auch Metallrohlinge bspw. Titanrohlinge die insbesondere einteilig ausgestaltet sind.

Auch bei derartigen Rohlingen ist die Erfindung einsetzbar.

Bei beiden Ausführungsformen können beim Einspannen der Werkstücke in die Werkstück-Spannzange Verschmutzungen zwischen den Einspannraum, also den Raum, der die Werkstück-Spannzange umgibt, und dem Rohlingshalter bzw. dem Rohling gelangen. Dies kann zu einer ungewünschten Verschiebung der Ausrichtung eines Rohlings führen, also einem Versatz in eine der Raumrichtungen X, Y und Z, oder ggf. zu einer versehentlichen Verdrehung des Rohlings, führen.

Dies gilt in gleicher Weise bei manueller Bestückung durch den Benutzer.

Die Ausrichtung des Rohlings im Werkstückhalter ist wichtig, um die Dentalrestauration an der richtigen Stelle anfertigen zu können. Bevorzugt ist mindestens eine und besonders bevorzugt sind mindestens 2 zueinander orthogonale und einander benachbarte Flächen des Rohlings dann vorab plangeschliffen oder plangefräst.

Die leichte Balligkeit, wie sie beim Vorsintern entsteht, wird hierdurch eliminiert. Durch das Vorfräsen lässt sich bei richtiger Ansteuerung der Fräsmaschine die Orthogonalität der Flächen dem Grunde nach sicherstellen.

Dies gilt auch, wenn das Vorfräsen in einem eigenen, vorgeschalteten Verfahren stattfindet, also vor der eigentlichen Produktion.

In erfindungsgemäß vorteilhafter Ausgestaltung wird jede Fläche an 3 Anlagepunkten im Raum erfasst. Damit ist die Lage der planen Fläche der Auswerteeinrichtung bekannt. Es versteht sich, dass im Einzelfall auch lediglich 1 Anlagepunkt, oder ggf. 2 Anlagepunkte ausreichen, um die Lage der Fläche zu erfassen, z.B., wenn die Ausrichtung dieser bereits vorab anderweitig bekannt geworden ist.

Wenn nun 2 entsprechende Flächen, die zueinander orthogonal sein sollen, in gleicher Weise mittels Dreipunkterfassung erfasst werden, kann auch zugleich die Orthogonalität überprüft werden, wenn dies erwünscht ist.

Hierbei kommt der besondere Vorteil zutragen, dass der erfindungsgemäße Tastfühler mehrdimensional arbeitet, also beispielsweise die Auslenkung des Tastelements an der Stirnseite erfasst und eine seitliche Auslenkung des Tastelements erfasst.

Es lässt sich dann mit der gleichen Position des Tastfühlers durch Verfahren im Raum die erwünschte Erfassung beider Flächen sicherstellen. Besonders günstig ist es, dass dabei das Werkstück nicht gedreht werden muss, so dass die Ungenauigkeiten und Winkeländerungen, die hiermit verbunden sind, außer Betracht bleiben können.

In einer weiteren Ausgestaltung der Erfindung ist es vorgesehen, einen 6fach-Werkzeughalter für das Einspannen und Halten von 6 Rohlingen zu verwenden. Ein solcher Halter ist auch teilbestückbar, also so bestückbar, dass beispielsweise nur an den Positionen 1, 4 und 5 Rohlinge eingespannt gehalten sind.

In vorteilhafter Ausführung der Erfindung lässt sich dann zunächst das Vorhandensein der Rohlinge an den Positionen 1, 2, 3, 4, 5 und 6 überprüfen. Über die Auswerteeinrichtung wird festgestellt, dass lediglich an den Positionen 1, 2, 3 und 5 Rohlinge vorhanden sind.

Dieser Test auf Vorhandensein kann beispielsweise dadurch erfolgen, dass der Werkstückhalter so zum Tastfühler bewegt wird, dass dieser beim Vorhandensein eines Rohlings ein Signal abgeben würde, und bei nicht Vorhandensein kein Signal abgibt.

Bevorzugt werden dann die zueinander orthogonalen und plangeschliffenen Flächen der Rohlinge an den Positionen 1, 4 und 5 Rohling nach Rohling erfasst, und zwar indem mindestens 3 Messpunkte pro Rohling ausgewählt werden, beispielsweise einer an der Seitenfläche und 2 an der dem Tastfühler zugewandten Fläche.

Es ist auch möglich, die Anzahl der Messpunkte in einer beliebigen anderen Weise zu wählen, um die Genauigkeit bzw. die Erfassbarkeit der Lage des Rohlings im Raum zu verbessern.

Die erfasste Position des Rohlings wird dann in der Auswerteeinrichtung abgespeichert, und im Grunde in dieser mit einem Nullpunkt oder einer Nullachse des Fräskoordinatensystems in Beziehung gesetzt.

Sobald die Vermessung abgeschlossen ist, wird der Tastfühler, beispielsweise über den Roboterarm, einen Werkstückschlitten oder in einer beliebigen anderen Weise wie auch zum Beispiel manuell, der Frässpindel entnommen und es wird ein Werkzeug eingeführt, das vorab ebenfalls vermessen wurde.

Die Auswerteeinrichtung hat dann den relativen Versatz zwischen der aktuellen Lage des betreffenden Rohlings und dem Nullpunkt oder der Nullachse des Fräskoordinatensystems berechnet und überlagert diesen Versatz den NC-Daten, die die Fräsmaschine für den Frässchritt empfangen hat.

In modifizierter Ausgestaltung weisen die Rohlinge zentrale Ausnehmungen auf, die auch als Löcher bezeichnet werden können. Der Begriff "Loch" und damit der Begriff "Ausnehmung" sei hier nicht auf runde oder sonstige in Ihrer Form festgelegte Löcher beschränkt zu verstehen. Vielmehr können bei dieser Ausgestaltung der Erfindung auch mehreckige, konische oder sonstige Löcher verwendet werden, also beliebige, deren Form von der Zylinderform abweicht.

Eine solches Loch kann insofern auch als "Ausnehmung" oder "Vertiefung" bezeichnet werden.

Derartige Rohlinge lassen sich beispielsweise für Abutments verwenden, ober aber für Suprakonstruktionen mit Schraubkanal, also solchen, bei denen ein

Zugang zur Implantatschraube über diesen Kanal möglich ist, und bei welchem der Kanal bei Fertigstellung der Dentalrestauration im Mund des Patienten verfüllt wird.

Gerade bei Abutments ist die Lage dieser Ausnehmung im Raum wichtig, und erfindungsgemäß ist es vorgesehen, dass das Tastelement mindestens mit seiner vorderen Tastkugel in die Ausnehmung eintauchen und dessen Lage erfassen kann. Hierfür weist die Tastkugel einen kleineren Durchmesser als die Ausnehmung auf. Es ist aber auch möglich, dass die Tastkugel einen größeren Durchmesser als die Ausnehmung hat. Sie ist dann jedenfalls für die Erfassung der Lage einer Fläche geeignet. Ferner ist es möglich, die Begrenzungskante der Fläche, also die Kante, an der die Fläche abrupt endet, zu erfassen.

Dadurch lässt sich zugleich auch die Position der dort angrenzenden Fläche erfassen, zumindest wenn die beiden Flächen orthogonal zueinander sind.

Die Begrenzungskante lässt sich auch dann mit dem Tastelement erfassen, wenn dessen Tastkugel einen größeren Durchmesser als die Ausnehmung hat.

Erfindungsgemäß ist die Auslenkkraft des Tastelements recht gering, beispielsweise 200 bis 500 mN. Das Tastelement weist eine Tastkugel aus einem harten Material auf, das insofern verschleißfest ist. Bevorzugt lässt es sich daher auch an dem Rohling entlangführen, so dass auch erfassbar ist, ob eine Fläche des Rohlings auch über ihren Verlauf tatsächlich plan ist.

Weitere Vorteile, Einzelheiten sowie Merkmale ergeben sich aus der nachfolgenden Beschreibung anhand mehrerer Ausführungsbeispiele der Erfindung anhand der Zeichnung.

Es zeigen:
- Fig. 1: eine schematische Darstellung des für die Erfindung relevanten Teils einer erfindungsgemäßen Fräsmaschine mit in die Frässpindel eingesetztem Abtaster;
- Fig. 2: einen Mehrfach-Werkstückhalter für eine erfindungsgemäße Fräsmaschine;
- Fig. 3: eine vergrößerte Darstellung eines Teils einer erfindungsgemäßen Kombination aus einer Fräsmaschine und einem Werkstück, unter Darstellung des Tastfühlers, in perspektivischer Darstellung;
- Fig. 4: eine Darstellung von Anlagepositionen des Tastfühlers an einem Werkstück in einer weiteren Ausführungsform;
- Fig. 5: eine Darstellung von Anlagepositionen in einer anderen Ausführungsform der Erfindung;
- Fig. 6: eine perspektivische Darstellung eines anderen Werkstücks; und
- Fig. 7: eine perspektivische Darstellung einer weiteren Ausführungsform einer Fräsmaschine mit einem Mehrfach-Werkstückhalter.

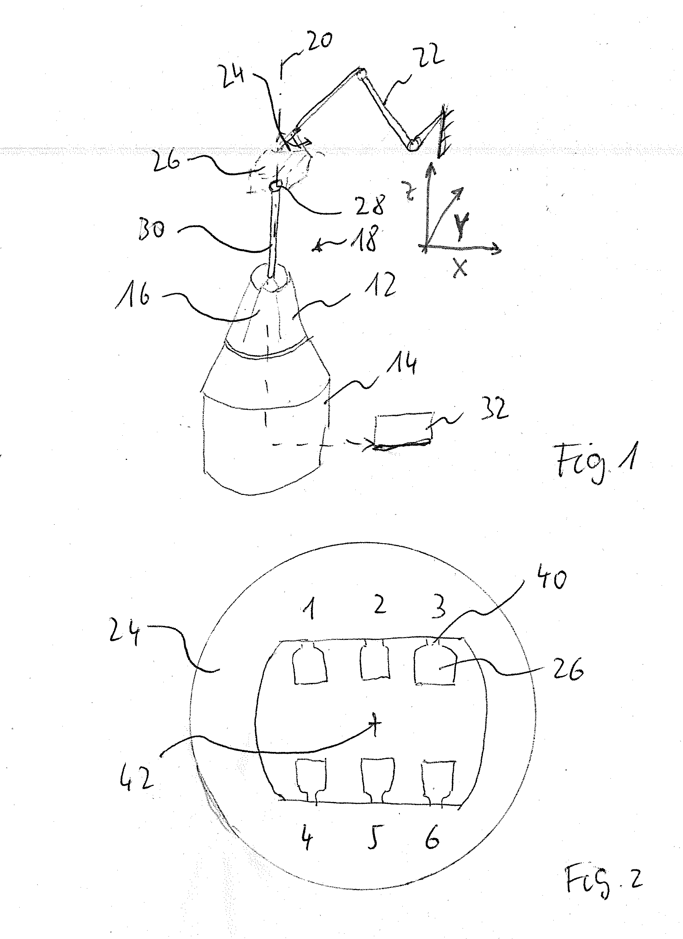

In Fig. 1 ist eine erfindungsgemäße Fräsmaschine 10 in einer ersten Ausführungsform schematisch und perspektivisch dargestellt.

Zu der Fräsmaschine 10 gehört eine Frässpindel 12. Die Frässpindel 12 hat eine vertikale Achse und ist in einem Spindelgehäuse 14 gelagert und geführt. Die Frässpindel 12 erstreckt sich nach oben, und das Spindelgehäuse 14 ist fest mit einem Rahmen der Fräsmaschine 10 verbunden, also ortsfest. Es versteht sich, dass anstelle dessen auch eine horizontale Ausrichtung der Frässpindel möglich ist.

Die Fräsmaschine 10 kann erfindungsgemäß hinsichtlich ihrer Achsenverteilung beliebig ausgestaltet sein, Bevorzugt liegt eine 5-Achsen-Maschine vor, also eine solche, bei der die Summe der Bewegungsachsen von Werkstück und Werkzeug 5 ist. Hierzu gehören also Maschinen mit den Achsenverteilungen 5/0, 4/1, 3/2, 2/3, 1/4 und 0/5. Es sind aber z.B. auch 4-Achsen- oder 6-Achsen-Maschinen möglich, ohne den Bereich der Erfindung zu verlassen.

In die Frässpindel 12 ist in an sich bekannter Weise über eine Spannzange 16 ein Werkzeug einspannbar.

Erfindungsgemäß wird anstelle des Werkzeugs ein Tastfühler 18 als Abtaster an der Stelle eingespannt, an der im Betrieb das Werkzeug eingespannt ist.

Hierzu wir die Spannzange 16 soweit geöffnet, dass der Schaft des Tastfühlers 18 hineinpasst und der Tastfühler 18 bis zum Anschlag eingeführt. Die Spannzange 16 wird dann geschlossen.

Der Tastfühler 18 erstreckt sich exakt in der Achse der Frässpindel 16 der Fräsmaschine 10. Die Fräsmaschine 10 weist ferner einen schematisch dargestellten Roboterarm 22 oder eine Werkstückschlitten auf. Dieser trägt an seinem vorderen Ende einen ebenfalls schematisch dargestellten Werkstückhalter 24. Der Werkstückhalter 24 ist motorisch öffenbar und schließbar, um ein ebenfalls schematisch dargestelltes Werkstück 26 aufzunehmen.

Über den Roboterarm 22 ist das Werkstück 26 in 5 Raumrichtungen verfahrbar.

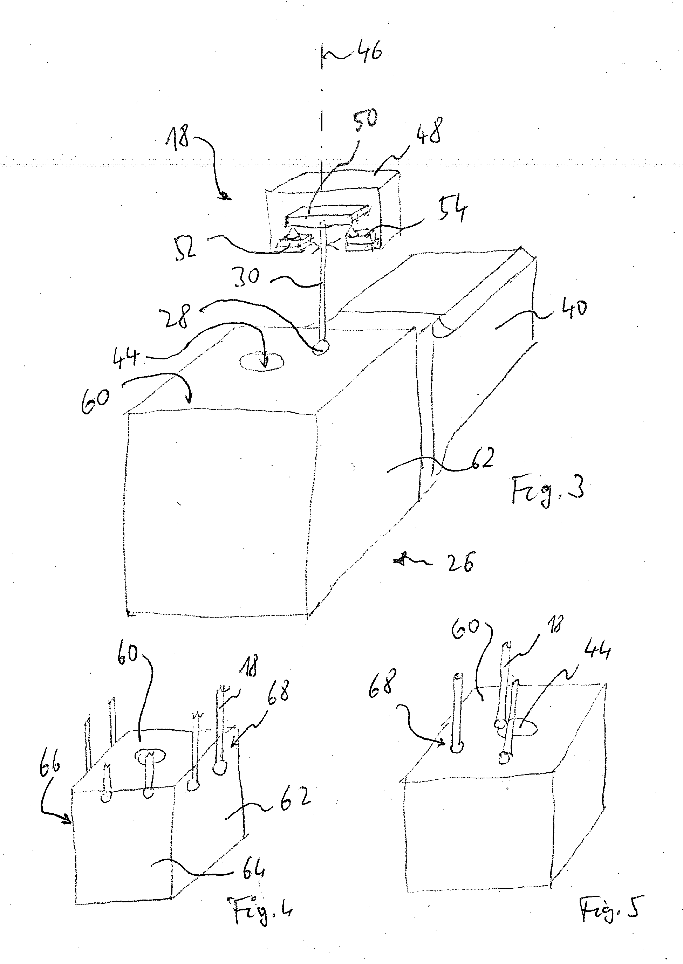

Die genaue Ausgestaltung des Werkstücks 26 in dem vorliegenden Ausführungsbeispiel lässt sich besser aus Fig. 3 ersehen.

Aus Fig. 1 ist es ersichtlich, dass das Werkstück 26 mit einer Seitenfläche an den Tastfühler 18 führbar ist. Der Roboterarm 22 bewegt sich solange, bis die betreffende Seitenfläche des Werkstück 26 an dem Tastfühler 18 anliegt und ganz leicht gegen diesen drückt.

Im dargestellten Ausführungsbeispiel ist dies ein axialer Druck, also in Richtung der Achse 20. Für die Druckaufnahme weist der Tastfühler 18 eine Tastkugel 28 auf, die an dem vorderen Ende ein Tastelement 30 des Tastfühlers 18 abschließt.

Das Tastelement 30 ist in dem Tastfühler 18 im Übrigen, beweglich geführt welcher Tastfühler 18 in der Frässpindel 12 eingespannt ist und dessen insofern relevanter Teil nicht sichtbar ist.

Die bewegliche Führung ist in der Richtung der Achse 20 gegeben, aber auch seitlich, also in den beiden hierzu orthogonalen Richtungen.

Der erfindungsgemäße Tastfühler 18 ist ein dreidimensionaler Tastfühler 18.

Der Tastfühler 18 gibt ein Signal ab, sobald eine Auslenkung in einer der Raumrichtungen, also achsparallel (Z-Richtung) oder seitlich hierzu (X-Richtung und Y-Richtung), erfasst wird. Das Signal entsteht bereits, wenn eine ganz geringe Auslenkung beispielsweise um 0,01 mm vorliegt.

Bevorzugt werden unterschiedliche Signale abgegeben, in Abhängigkeit davon, in welcher Raumrichtung die Bewegung erfolgt.

Die Ausgangssignale des Tastfühlers 18 werden einer Auswerteeinrichtung 32 zugeleitet. Die Auswerteeinrichtung 32 erfasst die erste Abgabe eines Signals hinsichtlich der Bewegung des Tastelements 30 gegenüber dem Tastfühler 18 im Übrigen, aber natürlich auch etwaige weitere Bewegungen.

Im dargestellten Ausführungsbeispiel wird basierend auf der Erfassung der Auslenkung durch die Auswerteeinrichtung 32 die vertikale Bewegung des Roboterarmes 22 gestoppt und die so erhaltene Position des Roboterarmes 22 abgespeichert. Diese ist gleichsam eine Kalibrierposition oder Nullposition in Richtung der Achse 20.

Es versteht sich, dass ein entsprechender Antrieb für den Roboterarm 22 vorgesehen ist, der mit der Auswerteeinrichtung 32 verbunden ist. Dieser Antrieb ist in den Figuren nicht dargestellt und in an sich bekannter Weise ausgeführt.

Der Roboterarm 22 erlaubt es, abgesehen von den Bewegungen des Werkstückhalters 24 und damit des Werkzeugs 26 in den drei kartesischen Koordinatenachsen, eine Rotation des Werkstückhalters 24 um 2 Achsen vorzunehmen, die zueinander orthogonal sind.

Damit ist es bei einem quaderförmigen Rohling möglich, mindestens 5 der 6 Quaderflächen anzufahren und abzutasten, indem sie in Kontakt mit der Tastkugel 28 gebracht werden.

Die 6. Fläche des quaderförmigen Rohlings ist üblicherweise zumindest in der Mitte von einer nicht dargestellten Werkstück-Haltezapfen 40 eingenommen. Wenn seitlich des Haltezapfen 40 die betreffende Fläche zugänglich ist, ist auch die Erfassung der Lage der 6. Flächen des Rohlings möglich.

Für jede der genannten Flächen, mindestens aber für 2 zueinander orthogonale Flächen, wird die Position des Rohlings an dieser Fläche über den erfindungsgemäßen Tastfühler 18 erfasst und abgespeichert.

Fig. 2 zeigt eine demgegenüber modifizierte Ausgestaltung eines Werkstückhalters 24. Dieser Werkstückhalter 24 weist 6 Aufnahmepositionen 1, 2, 3, 4, 5 und 6 auf.

Es ist vorgesehen, dass die Werkstücke als Blöcke, insbesondere aus Keramik, ausgebildet sind und mehrere Blöcke in dem Werkstückhalter 24 eingespannt gehalten werden.

An diesen Aufnahmepositionen sind Spannausnehmungen für Werkstück-Haltezapfen 40 vorgesehen, und in dem dargestellten Ausführungsbeispiel in der vereinfachten Darstellung gemäß Fig. 2 sind alle 6 Aufnahmepositionen mit Werkstücken 26 bestückt. Hierbei weist jedes Werkstück 26 einen Werkstück-Haltezapfen 40 auf, auf dem der Keramikkörper des Werkstücks 26 aufgeklebt ist, und der Haltezapfen 40 ist an der betreffenden Aufnahmeposition eingespannt. Es versteht sich, dass der Keramikkörper und der Haltezapfen auch einstückig ausgestaltet sein können.

Der Werkstückhalter 24 gemäß Fig. 2 lässt sich in einem modifizierten Roboterarm 22 an dessen Bewegungsende aufnehmen und dort in beliebigen Raumrichtungen verfahren.

Die Dimensionierung des Tastfühlers 18 im Vergleich mit den Werkstücken 26 gemäß Fig. 2 und dem Werkstückhalter 24 ist so gewählt, dass der Tastfühler 18 in beliebiger Weise auch in die Zwischenräume zwischen den Werkstücken 26 einführbar ist und dort Erfassungsschritte vornehmen kann.

Günstig ist es, wenn die Fräsmaschine 10 einen mit mehreren Werkstücken bestückbaren Werkstückhalter 24 aufweist und dass der Tastfühler 18 neben der Lage des Werkstücks auch dessen Vorhandensein erfasst, insbesondere über eine Auswerteinrichtung 32.

Bevorzugt sind wiederum bei jedem Keramikkörper des Werkstücks 26, das gefräst werden soll, 2 Flächen vorab plan geschliffen. Diese werden für die Kalibrierung der Lage des betreffenden Werkstücks 26 im Raum verwendet.

Daneben besteht ein Nullpunkt 42 des Werkstückhalters 24, wobei erfindungsgemäß zusätzlich erfasst werden kann, in welcher räumlichen Position jedes Werkstück 26 gegenüber dem Nullpunkt 42 ist.

In Fig. 3 ist eine modifizierte Ausgestaltung einer erfindungsgemäßen Fräsmaschine 10 im Detail dargestellt. Hier wie auch in den weiteren Figuren bezeichnen gleiche Bezugszeichen gleiche oder entsprechende Teile.

Das Werkstück 26 mit dem Haltezapfen 40 ist deutlich größer dargestellt als in den vorherigen Figuren. Das Werkstück 26 weist auch eine Ausnehmung 44, insbesondere eine Durchtrittsausnehmung 44 oder einer beliebigen anderen Ausnehmung auf.

Dieses erstreckt sich orthogonal zu dem im Grunde quaderförmigen Werkstück 26 durch 2 Seitenflächen hindurch. Der Durchmesser der Ausnehmung 44 ist deutlich größer als der Durchmesser des Tastfühlers 18 und der Tastkugel 28 des Tastfühlers 18. Alternativ kann der Durchmesser des Tastfühler (18) und der Tastkugel (28) allerdings auch auch größer sein, wobei eine geringere Auslenkung ein Signal auslöst.

Der Tastfühler 18 weist das Tastelement 30 auf. Das Tastelement 30 ist über ein Mehrachsenlager 46 an einem Gehäuse 48 des Tastelements 30 gelagert.

Die Auslenkkraft, also die Kraft, die für die Auslenkung des Tastelements 30 der Tastfühlers 18 benötigt wird, ist 1 N oder weniger.

Das Tastelement 30 endet an einer Auslenkplatte 50 jenseits des Mehrachsenlagers 46. Die Auslenkplatte 50 ist so ausgebildet, dass sie an einer Mehrzahl von Drucksensoren anliegt, von denen in Fig. 3 zwei Drucksensoren 52 und 54 dargestellt sind.

Bei Auslenkung des Tastelements 30 an der Tastkugel 28 wird nun mindestens einer der Drucksensoren, zum Beispiel der Drucksensor 54, zusammengedrückt und damit aktiviert.

Mit der Erstauslenkung wird auch ein Erstauslenkungssignal abgegeben, das der Auswerteeinrichtung 32 zugeleitet wird.

Auch wenn in Fig. 3 die Drucksensoren 52 und 54 als Schalter dargestellt sind, versteht es sich, dass anstelle dessen beispielsweise Dehnungsmessstreifen verwendet werden können, wie die Größe der Auslenkung messen und erfassen.

Diese Ausführungsform kann günstig sein, wenn es erwünscht ist, die Bewegung des Werkzeugs 26 relativ zu der Fräsmaschine 10 im Übrigen zu erfassen.

Wenn die Tastkugel 28 des Tastfühlers 18 in die Ausnehmung 44 eingeführt wird, erfährt er zunächst keine Auslenkung. Wenn jedoch der Tastfühler 18 dann seitlich bewegt wird, liegt die Tastkugel 28 am Innendurchmesser an der Innenfläche derAusnehmung 44 an, und sie erfährt eine Auslenkung, die einen der Drucksensoren 52 und 54 aktiviert.

Mit dieser Maßnahme lässt sich über die seitliche Auslenkung auch die Lage der Ausnehmung 44 bestimmen.

Die Ausnehmung 44 ist in einer Fläche 60 des Werkstücks 26 vorgesehen. Diese ist vorab plangeschliffen oder plangefräst, ebenso wie eine hierzu orthogonale Fläche 62.

Diese beiden genannten Flächen 60 und 62 werden bevorzugt mehrmals angefahren, und durch die Auslenkung des Tastelements 30 wird je die Lage der Fläche im Raum erfasst.

Die Erfassung der Lage der Fläche 62 im Raum, aber auch der weiteren Flächen 64 und 66, über mehrere Abtastpositionen 68 ist schematisch in Fig. 4 dargestellt.

Die Flächen 62, 64 und 66 werden je an zwei voneinander beabstandeten Stellen angefahren. Damit lässt sich auch die Orthogonalität der Ausrichtung der Flächen 62 bis 66 zueinander erfassen.

Gemäß Fig. 5 sind 3 Abtastpositionen 68 der Fläche 60 dargestellt. Diese 3 Abtastpositionen 68 erlauben der Auswerteeinrichtung 32, die exakte Lage der Fläche 60 im Raum zu erfassen und abzuspeichern.

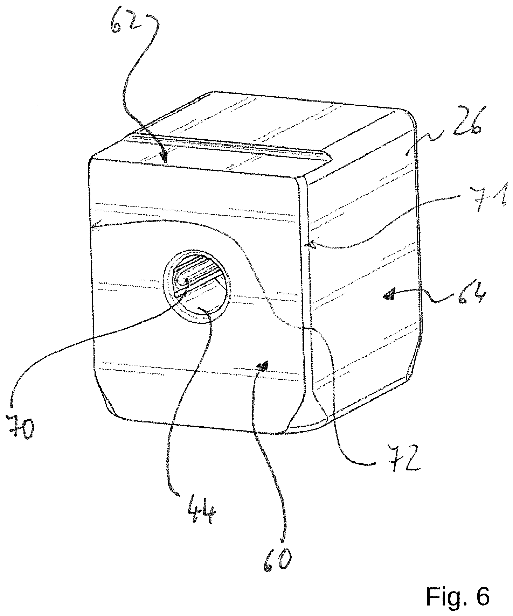

Fig. 6 zeigt eine perspektivische Darstellung eines anderen Werkstücks 26. Das Werkstück 26 weist eine Ausnehmung 44, nämlich eine Durchtrittsausnehmung auf. In dieser ist eine Rotationssicherung 70 vorgesehen.

Deren Lage läßt sich erfindungsgemäß mittels des Tastfühlers 18 durch Anlage dort und durch Auslenkung des Tastelements 30 erfassen.

Damit ist auch die Bestimmung der korrekten Orientierung des Rohlings 26 im Raum möglich. Eine solche Ausnehmung 44 kann z.B. als Implantatschraubenkanal dienen . Die Rotationssicherung 70 erstreckt sich im Ausführungsbeispiel nach außen, also als Vertiefung. Sie kann alternativ auch nach innen weisen, also radial einwärts vorspringen.

Zusätzlich lässt sich auch die Lage der relevanten Flächen 60, 62 und 64, wie anhand von Fig. 4 beschrieben, bestimmen. Diese Flächen sind im Beispielsfalle zueinander orthogonal. Zwischen ihnen erstreckt sich je eine Begrenzungskante, wobei die Begrenzungskanten teils bearbeitet, also schart gefräst, und teils unbearbeitet sind. Zwischen den Flächen 60 und 64 erstreckt sich eine unbearbeitete Begrenzungskante 71, und dieser an der Fläche 60 gegenüberliegend eine bearbeitete Begrenzungskante 72, wie es in Fig. 6 dargestellt ist.

Die Lage der Begrenzungskanten ist ebenfalls erfindungsgemäß bei Bedarf erfassbar. Z.B. kann die Tastkugel 28 an der Fläche 60 entlanggleiten. Sobald die Bergrenzungskante 72 erreicht ist, wird das Tastelement 30 ausgelenkt, und damit die Lage der Begrenzungskante erfasst.

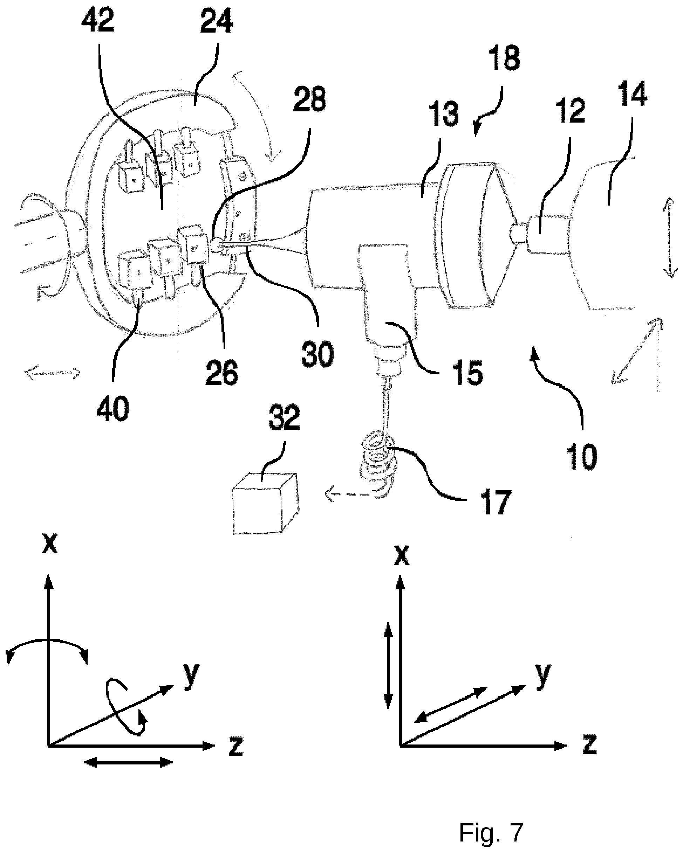

In Fig. 7 ist eine weitere Ausführungsform einer erfindungsgemäßen Fräsmaschine 10 schematisch und perspektivisch dargestellt.

Anstelle des Werkzeugs ist ein Tastfühler 18 als Abtaster an der Stelle eingespannt, an der im Betrieb das Werkzeug eingespannt ist. Wie auch in anderen Ausführungsformen wird hier der Tastfühler 18 über eine in der Abbildung nicht dargestellte Spannzange in die Frässpindel 12 eingespannt. Die Frässpindel 12 erstreckt sich in dieser Ausführungsform horizontal, und das Spindelgehäuse 14 ist beweglich mit einem Rahmen der Fräsmaschine 10 verbunden. Das Spindelgehäuse 14 ist in zwei Richtungen beweglich, nämlich horizontal in der y-Achse des abgebildeten Koordinatensystems, und vertikal in Richtung der x-Achse. Dies würde in der Abbildung einer Verschiebung entlang der x- und y- Achse, also beiden Querrichtungen des Tastelements 30, entsprechen.

Der Tastfühler 18 weist in diesem Ausführungsbeispiel einen Funktionskörper 13, eine Anschlussbuchse 15, ein Anschlusskabel 17, ein Tastelement 30 sowie eine Tastkugel 28 auf. Der Funktionskörper 13 weist die Elektronik des Tastfühlers 18 auf. Die Anschlussbuchse 15 ermöglicht die Verbindung zur Auswerteeinrichtung 32 über das Anschlusskabel 17, um die von der Auslenkung des Tastelements 30 erzeugten Ausgangssignale zur Auswerteeinrichtung 32 zu übertragen.

Weiterhin zeigt Fig. 7 eine gegenüber dem Ausführungsbeispiel gemäß Fig.1 modifizierte Ausgestaltung eines Werkstückhalters 24. Dieser ist in Z-Richtung horizontal beweglich, nämlich in axialer Richtung des Tastfühler 18 verschiebbar, und um zwei Befestigungsachsen verschwenkbar, nämlich in der Ebene des Werkstückhalters 24. Bezüglich des abgebildeten Koordinatensystems entsprechen diese Bewegungen einer Rotation um die y-Achse, einem Verschwenken entlang der x-Achse und einer Bewegung entlang der z-Achse. Der Werkstückhalter 24 weist Aufnahmepositionen mit Spannausnehmungen für Werkstück-Haltezapfen 40 auf, und in dem dargestellten Ausführungsbeispiel sind alle 6 Aufnahmepositionen mit Werkstücken 26 bestückt.

Der Tastfühler 18 wird solange von der Seite, also entlang der in Fig 7 abgebildeten y-Achse, dem Werkstück 26 angenähert, bis er anliegt, während gleichzeitig die Auslenkung des Tastelements 30 erfasst wird, bis die gemessene Auslenkung einen gewissen Schwellenwert überschreitet. In diesem Fall gibt der Tastfühler 18 ein Signal über das Anschlusskabel 17 an die Auswerteeinrichtung 32 ab, dass die zu erfassende Annäherung erreicht ist. Durch die Beweglichkeit in 5 Raumrichtungen ist es mit diesem Ausführungsbeispiel möglich, in einem Schritt sehr einfach alle Abmessungen des Werkstücks 26 zu vermessen.

Auch möglich ist eine Annäherung des Werkstücks 26 und des Werkstückhalters 24 an den Tastfühler 18 entlang der in Fig 7 abgebildeten z-Achse, während gleichzeitig die Auslenkung des Tastelements 30 erfasst wird. In diesem Ausführungsbeispiel wird wiederum, wenn die gemessene Auslenkung einen gewissen Schwellenwert überschreitet, ein Signal über das Anschlusskabel 17 an die Auswerteeinrichtung 32 abgegeben, dass die zu erfassende Annäherung erreicht ist.

## Patentansprüche

1. Fräsmaschine, mit einer Frässpindel und einem Werkstückhalter, der gegenüber der Frässpindel in mindestens 2, insbesondere mindestens 3, Raumrichtungen beweglich gelagert ist, mit einem Werkstück, das an dem Werkstückhalter eingespannt gehalten ist, mit einem Abtaster, relativ zu welchem das Werkstück in Anlage bringbar ist und relativ zu welchem Werkstück der Abtaster zur Abtastung des Werkstück bewegbar ist, **dadurch gekennzeichnet, dass** der Abtaster als Tastfühler (18), mit einer Auslenkung und Erfassung einer Auslenkung seines Tastelements (30) in mindestens 1 Raumrichtung, insbesondere in mindestens 2 Raumrichtungen, ausgebildet ist und dass das Werkstück, eine Ausnehmung (44) aufweist, in die das Tastelement (30) eintaucht und dessen Lage erfasst und dass aus jedem Werkstück ein Dentalrestaurationsteil mit Ausnehmung (44), wie ein Abutment oder eine Suprakonstruktionen mit Schraubkanal herstellbar ist.

2. Fräsmaschine nach Anspruch 1, **dadurch gekennzeichnet, dass** der Tastfühler (18), insbesondere anstelle des Werkzeugs (30), in der Frässpindel (12) eingespannt gehalten ist

3. Fräsmaschine nach einem der vorhergehenden Ansprüche, **dadurch gekennzeichnet, dass** die Fräsmaschine (10) als Mehrachs-Fräsmaschine mit mehreren, insbesondere 5 Bewegungsachsen des Werkstückhalters (24) und keiner Bewegungsachse der Frässpindel (12), oder mehrere, insbesondere 5, Bewegungsachsen der Frässpindel (12) und keiner Bewegungsachse des Werkstückhalters (24), ausgebildet ist, oder in einer beliebigen anderen Verteilung der Bewegungsachsen und das Werkstück insbesondere an einem Roboterarm (22) zum in die Frässpindel (12) eingespannten Tastfühler (18) bewegbar ist.

4. Fräsmaschine nach einem der vorhergehenden Ansprüche, **dadurch gekennzeichnet, dass** das Werkstück mindestens eine plane Fläche (60) aufweist, und dass es mit der Fläche (60) oder einer Begrenzungskante (72) der Fläche in Anlage mit dem Tastfühler (18) bringbar ist.

5. Fräsmaschine nach einem der vorhergehenden Ansprüche, **dadurch gekennzeichnet, dass** der Tastfühler (18) an eine Auswerteinrichtung (32) angeschlossen ist, die bei Anlage, insbesondere Erstanlage, des Tastfühlers (18) an dem Werkstück, insbesondere einem Rohling, und bei der durch die Anlage erzeugte Auslenkung des Tastelements (30) ein Signal abgibt, das einen Nullpunkt (42) oder eine Nullachse in einem Fräskoordinatensystem wiidergibt.

6. Fräsmaschine nach einem der vorhergehenden Ansprüche, **dadurch gekennzeichnet, dass** der Werkstückhalter (24) eine Mehrzahl von Rohlingen, eingespannt hält und je ein Signal bei Erstanlage an jedem Rohling für jeden getrennt abgebbar und einer Auswerteinrichtung (32) zuleitbar ist.

7. Verfahren zum Betrieb einer Fräsmaschine, welche eine Frässpindel und einen Werkstückhalter aufweist, welcher Werkstückhalter (24) gegenüber der Frässpindel von der Fräsmaschine (10) in mindestens 3, insbesondere in mindestens 4 Raumrichtungen bewegt wird, wobei ein Werkstück (26) in dem Werkstückhalter (24) eingespannt gehalten wird, und mit einem Abtaster, der in die Frässpindel eingespannt wird und mit dem Werkstück (26) in Anlage bringbar ist, wobei das Werkstück (26) relativ zur Abtastung des Werkstücks (26) bewegbar ist, **dadurch gekennzeichnet, dass** ein Tastelement (30) des als Tastfühler (18) ausgebildeten Abtasters bei Anlage an das Werkstück (26) ausgelenkt wird, und zwar in mindestens einer Raumrichtung, insbesondere in mindestens 2 Raumrichtungen, wobei insbesondere eine der Raumrichtungen eine Richtung ist, die der Ausrichtung des Tastelements (30) entspricht, und eine Raumrichtung eine Richtung quer zu dieser ist, insbesondere orthogonal zu dieser ist und dass das Werkstück, eine Ausnehmung (44) aufweist, in die das Tastelement (30) eintaucht und dessen Lage erfasst und dass aus jedem Werkstück ein Dentalrestaurationsteil mit Ausnehmung (44), wie ein Abutment oder eine Suprakonstruktionen mit Schraubkanal hergestellt wird.

8. Verfahren nach Anspruch 7, **dadurch gekennzeichnet, dass** das Tastelement (30) mit seiner Spitze gegen das Werkstück gedrückt wird und durch den Druck die Auslenkung des Tastelements (30) verursacht wird und dass die Auslenkung des Tastelements (30), insbesondere für jede Raumrichtung getrennt, erfasst wird.

9. Verfahren nach einem der Ansprüche 7 bis 8, **dadurch gekennzeichnet, dass** das Werkstück (26) als Block ausgebildet ist, und mindestens 2 Flächen aufweist, die sich senkrecht zueinander erstrecken und dass der Tastfühler (18) nacheinander in Anlage zu den Flächen gebracht wird.

10. Verfahren nach einem der Ansprüche 7 bis 10, **dadurch gekennzeichnet, dass** das Werkstück mindestens eine plane oder teilweise plane Fläche aufweist und dass der Tastfühler (18) in Anlage zu dieser Fläche gebracht wird und an 3 voneinander beabstandeten Stellen die Lage der Fläche von dem Tastfühler (18) erfasst wird.

11. Verfahren nach Anspruch 7, **dadurch gekennzeichnet, dass** der Tastfühler (18) eine Ausnehmung (44) berührt oder in die Ausnehmung (44) einfährt oder teilweise einfährt und bei seitlicher Erstanlage seines Tastelements (30) an der Ausnehmung (44) und erfasster Auslenkung ein Nullstellensignal einer Auswerteinrichtung (32) zuleitet und/oder dass das Werkstück ein Ausnehmung(44) aufweist, das sich in einer planen Fläche erstreckt und dass der Tastfühler (18) in die Ausnehmung (44) zu Erfassung dessen Lage mindestens teilweise eingeführt wird.

12. Verfahren nach einem der Ansprüche 7 bis 11, **dadurch gekennzeichnet, dass** eine Seitenfläche eines Rohlings vor oder nach der Ausnehmung (44) von dem Tastfühler (18) angefahren wird und dass die Anlage des Tastfühlers (18) an der Seitenfläche und dem sich in dieser erstreckenden Ausnehmung (44) in einem Zuge erfolgt, also ohne die Anlage zwischen Tastfühler (18) und Rohling aufzugeben, und/oder dass der Tastfühler (18) mit seinem Tastelement (30) am Rohling entlang gleitend geführt wird.

13. Verfahren nach einem der Ansprüche 7 bis 12, **dadurch gekennzeichnet, dass** die Ausnehmung (44) eine Rotationssicherung (70) aufweist und dass der Tastfühler (18) in die Ausnehmung einfährt und durch Anlage an dieser die Rotationssicherung (70) erfasst.

## Claims

1. A milling machine, comprising a milling spindle and a workpiece holder which is mounted so as to move with respect to the milling spindle in at least 2, in particular 3, spatial directions, comprising a workpiece which is held in a clamped manner on the workpiece holder, comprising a sensor, relative to which the workpiece can be brought into contact and relative to which workpiece the sensor can be moved to sense the workpiece, **characterised in that** the sensor is designed as a sensing probe (18), having a deflection and detection of a deflection of its sensing element (30) in at least 1 spatial direction, in particular in at least 2 spatial directions, and that the workpiece comprises a recess (44) which the sensing element (30) enters and detects its position, and that from every workpiece a dental restoration part with a recess (44), such as an abutment or a superstructure with screw channel, can be produced.

2. The milling machine as claimed in claim 1, **characterised in that** the sensing probe (18), in particular instead of the tool (30), is held in a clamped manner in the milling spindle (12) .

3. The milling machine as claimed in any one of the preceding claims, **characterised in that** the milling machine (10) is designed as a multi-axis milling machine having several, in particular 5, movement axes of the workpiece holder (24) and no movement axis of the milling spindle (12), or several, in particular 5, movement axes of the milling spindle (12) and no movement axis of the workpiece holder (24), or in any other distribution of the movement axes, and the workpiece is movable in particular on a robot arm (22) towards the sensing probe (18) clamped in the milling spindle (12) .

4. The milling machine as claimed in any one of the preceding claims, **characterised in that** the workpiece comprises at least one planar surface (60), and that it can be brought into contact with the sensing probe (18) with the surface (60) or a boundary edge (72) of the surface.

5. The milling machine as claimed in any one of the preceding claims, **characterised in that** the sensing probe (18) is connected to an evaluation device (32) which, upon contact, in particular initial contact, of the sensing probe (18) with the workpiece, in particular a blank, and upon deflection of the sensing element (30), caused by the contact, outputs a signal which represents a zero point (42) or a zero axis in a milling coordinate system.

6. The milling machine as claimed in any one of the preceding claims, **characterised in that** the workpiece holder (24) holds a plurality of blanks in a clamped manner and a respective signal can be output upon initial contact with each blank for each one separately and can be fed to an evaluation device (32).

7. A method for operating a milling machine which comprises a milling spindle and a workpiece holder, which workpiece holder (24) is moved with respect to the milling spindle of the milling machine (10) in at least 3, in particular 4, spatial directions, wherein a workpiece (26) is held in a clamped manner in the workpiece holder (24), and comprising a sensor which is clamped into the milling spindle and can be brought into contact with the workpiece (26), wherein the workpiece (26) can be moved relative to the sensing of the workpiece (26), **characterised in that** a sensing element (30) of the sensor designed as a sensing probe (18) is deflected upon contact with the workpiece (26), and specifically in at least one spatial direction, in particular in at least 2 spatial directions, wherein in particular one of the spatial directions is a direction which corresponds to the orientation of the sensing element (30), and one spatial direction is a direction transverse to this direction, in particular orthogonal to this direction, and that the workpiece comprises a recess (44) which the sensing element (30) enters and detects its position, and that from every workpiece a dental restoration part with a recess (44), such as an abutment or a superstructure with screw channel, is produced.

8. The method as claimed in claim 7, **characterised in that** the sensing element (30) is pressed with its tip against the workpiece, and the deflection of the sensing element (30) is caused by the pressure, and that the deflection of the sensing element (30) is detected, in particular separately for each spatial direction.

9. The method as claimed in any one of claims 7 to 8, **characterised in that** the workpiece (26) is formed as a block and comprises at least 2 surfaces which extend perpendicularly to each other and that the sensing probe (18) is brought into contact with the surfaces one after the other.

10. The method as claimed in any one of claims 7 to 10, **characterised in that** the workpiece comprises at least one planar or partially planar surface, and that the sensing probe (18) is brought into contact with this surface, and the position of the surface is detected by the sensing probe (18) at 3 points spaced apart from one another.

11. The method as claimed in claim 7, **characterised in that** the sensing probe (18) touches a recess (44) or enters, or partially enters, the recess (44) and, upon lateral initial contact of its sensing element (30) with the recess (44) and detected deflection, feeds a zero point signal to an evaluation device (32), and/or that the workpiece comprises a recess (44) which extends in a planar surface, and that the sensing probe (18) is at least partially introduced into the recess (44) to detect the position thereof.

12. The method as claimed in any one of claims 7 to 11, **characterised in that** a lateral surface of a blank is approached by the sensing probe (18) before or after the recess (44), and that the contact of the sensing probe (18) with the lateral surface and the recess (44) extending therein takes place in one go, i.e. without breaking contact between the sensing probe (18) and the blank, and/or that the sensing probe (18) is guided with its sensing element (30) in a sliding manner along the blank.

13. The method as claimed in any one of claims 7 to 12, **characterised in that** the recess (44) comprises an anti-rotation device (70), and that the sensing probe (18) enters the recess and detects the anti-rotation device (70) through contact therewith.

## Revendications

1. Fraiseuse, avec une broche de fraisage et un porte-pièce qui est monté mobile dans au moins 2, en particulier au moins 3 directions spatiales par rapport à la broche de fraisage, avec une pièce à usiner qui est maintenue serrée sur le porte-pièce, avec un palpeur par rapport auquel la pièce à usiner peut être mise en contact et par rapport auquel le palpeur peut être déplacé pour le palpage de la pièce à usiner, **caractérisée en ce que** le palpeur peut être déplacé par rapport à la pièce à usiner, **en ce que** le palpeur est réalisé sous la forme d'un capteur de palpage (18), avec une déviation et une détection d'une déviation de son élément de palpage (30) dans au moins 1 direction spatiale, en particulier dans au moins 2 directions spatiales, et **en ce que** la pièce à usiner présente un évidement (44) dans lequel l'élément de palpage (30) est immergé et dont il détecte la position, et **en ce que**, à partir de chaque pièce à usiner, une pièce de restauration dentaire avec un évidement (44), comme un pilier ou une superstructure avec un canal de vissage peut être fabriquée.

2. Fraiseuse selon la revendication 1, **caractérisée en ce que** le palpeur (18) est maintenu serré dans la broche de fraisage (12), en particulier à la place de l'outil (30).

3. Fraiseuse selon l'une des revendications précédentes, **caractérisée en ce que** la fraiseuse (10) est une fraiseuse multi-axes avec plusieurs, notamment 5 axes de déplacement du porte-pièce (24) et aucun axe de déplacement de la broche de fraisage (12), ou plusieurs, notamment 5, axes de déplacement de la broche de fraisage (12) et aucun axe de déplacement du porte-pièce (24), ou dans une autre répartition quelconque des axes de déplacement, et la pièce à usiner peut être déplacée en particulier sur un bras de robot (22) vers le palpeur (18) serré dans la broche de fraisage (12).

4. Fraiseuse selon l'une des revendications précédentes, **caractérisée en ce que** la pièce présente au moins une surface plane (60), et **en ce qu'**elle peut être mise en contact contre le palpeur (18) par la surface (60) ou par un bord de délimitation (72) de la surface.

5. Fraiseuse selon l'une des revendications précédentes, **caractérisée en ce que** le palpeur (18) est raccordé à un dispositif d'évaluation (32) qui émet un signal qui reproduit un point zéro (42) ou un axe zéro dans un système de coordonnées de fraisage, lors de la mise en contact, en particulier la première mise en contact, du palpeur (18) avec la pièce à usiner, en particulier avec un lingotin, et lors de la déviation de l'élément de palpage (30) générée par la mise en contact.

6. Fraiseuse selon l'une des revendications précédentes, **caractérisée en ce que** le porte-pièce (24) maintient serrée une pluralité de lingotins et **en ce que**, lors de la première mise en contact avec chaque lingotin, un signal peut être émis séparément pour chacun d'eux et être transmis à un dispositif d'évaluation (32).

7. Procédé pour faire fonctionner une fraiseuse, qui présente une broche de fraisage et un porte-pièce, ledit porte-pièce (24) étant déplacé par rapport à la broche de fraisage de la fraiseuse (10) dans au moins 3, en particulier dans au moins 4 directions spatiales, où une pièce à usiner (26) est maintenue serrée dans le porte-pièce (24), et avec un palpeur qui est serré dans la broche de fraisage et qui peut être mis en contact avec la pièce à usiner (26), où la pièce à usiner (26) peut être déplacée par rapport au palpage de la pièce à usiner (26), **caractérisé en ce qu'**un élément de palpage (30) du palpeur réalisé sous forme de capteur de palpage (18) est dévié lors du contact avec la pièce à usiner (26), et ceci dans au moins une direction spatiale, en particulier dans au moins 2 directions spatiales, où l'une des directions spatiales est en particulier une direction qui correspond à l'orientation de l'élément de palpage (30), et une direction spatiale est une direction transversale à celle-ci, en particulier orthogonale à celle-ci, et **en ce que** la pièce à usiner présente un évidement (44) dans lequel l'élément de palpage (30) est immergé et dont il détecte la position, et **en ce qu'**à partir de chaque pièce à usiner est fabriquée une pièce de restauration dentaire avec évidement (44), comme un pilier ou une superstructure avec canal de vissage.

8. Procédé selon la revendication 7, **caractérisé en ce que** l'élément palpeur (30) est pressé avec sa pointe contre la pièce à usiner et que la pression provoque la déviation de l'élément palpeur (30) et **en ce que** la déviation de l'élément palpeur (30) est détectée, notamment séparément pour chaque direction spatiale.

9. Procédé selon l'une des revendications 7 à 8, **caractérisé en ce que** la pièce à usiner (26) est réalisée sous forme de bloc et présente au moins 2 faces s'étendant perpendiculairement l'une à l'autre et **en ce que** le palpeur (18) est mis successivement en contact avec les surfaces.

10. Procédé selon l'une quelconque des revendications 7 à 10, **caractérisé en ce que** la pièce à usiner présente au moins une surface plane ou partiellement plane et **en ce que** le palpeur (18) est mis en contact avec cette surface et **en ce que** la position de la surface est détectée par le palpeur (18) en 3 points espacés.

11. Procédé selon la revendication 7, **caractérisé en ce que** le palpeur (18) touche un évidement (44) ou entre dans l'évidement (44) ou y entre partiellement et, en cas d'une première mise en contact latérale de son élément palpeur (30) sur l'évidement (44) et de déviation détectée, transmet un signal de position zéro à un dispositif d'évaluation (32) et/ou **en ce que** la pièce à usiner présente un évidement (44), qui s'étend dans une surface plane et **en ce que** le palpeur (18) est introduit au moins partiellement dans l'évidement (44) pour détecter sa position.

12. Procédé selon l'une des revendications 7 à 11, **caractérisé en ce qu'**une surface latérale d'un lingotin avant ou après l'évidement (44) est abordée par le palpeur (18) et **en ce que** la mise en contact du palpeur (18) avec la surface latérale et l'évidement (44) s'étendant dans celle-ci s'effectue en une seule fois, c'est-à-dire sans abandonner l'e contact entre le palpeur (18) et le lingotin, et/ou **en ce que** le palpeur (18) est guidé avec son élément de palpage (30) le long du lingotin de manière glissante.

13. Procédé selon l'une des revendications 7 à 12, **caractérisé en ce que** l'évidement (44) comporte un dispositif anti-rotation (70) et **en ce que** le palpeur (18) pénètre dans l'évidement et saisit le dispositif anti-rotation (70) par la mise en contact avec celui-ci.
